# EUROPÄISCHE PATENTANMELDUNG

(11) **EP 4 194 800 A1**
(43) Veröffentlichungstag der Anmeldung: **14.06.2023**
(21) Anmeldenummer: 22210472.1
(22) Anmeldetag: 30.11.2022
(51) Int. Cl.: G01B 5/008, G01B 21/04

(54) **KOORDINATENMESSGERÄT**

(30) Priorität: 10.12.2021 DE 102021132660
(71) Anmelder: Hexagon Metrology GmbH, 35578 Wetzlar (DE)
(72) Erfinder: Konrad, Armin, 35625 Hüttenberg (DE); Wunderlin, Léonard, 1131 Tolochenaz (CH); Rouge, Claude, 1446 Baulmes (CH)
(74) Vertreter: Knefel, Cordula

(57) **Zusammenfassung**

Die Erfindung betrifft ein Koordinatenmessgerät mit einer Pinole und
- einem Tastkopf oder
- einem Sensor oder
- einem Dreh-/Schwenkgelenk oder
- mit einem Dreh-/Schwenkgelenk mit einem an dem Dreh-/ Schwenkgelenk angeordneten Tastkopf oder Sensor und/oder
- mit einem Interface,
bei dem der Tastkopf oder der Sensor oder ein Adapter des Dreh-/Schwenkgelenkes und/oder das Interface wenigstens teilweise in der Pinole angeordnet sind/ist.

## Beschreibung

Die Erfindung betrifft ein Koordinatenmessgerät mit einer Pinole und einem Tastkopf oder einem Sensor oder einem Dreh-/Schwenkgelenk oder einem Drehschwenkgelenk mit einem an dem Dreh-/Schwenkgelenk angeordneten Tastkopf oder Sensor und/oder einem Interface. Das Interface dient zur Anordnung und/oder einem Wechsel mit hoher Positioniergenauigkeit eines Tastkopfes oder eines Sensors oder eines Dreh-/Schwenkgelenkes.

Aus der Praxis ist bekannt, zum dimensionellen Messen von Werkstücken mit Koordinatenmessgeräten taktile und nicht taktile Sensoren zu verwenden, die fest oder lösbar fest an einem Koordinatenmessgerät angeordnet sind.

Die aus der Praxis bekannten Koordinatenmessgeräte bestehen aus mehreren beweglichen Achsen, die es ermöglichen, den Sensor im Raum so zu bewegen, dass Werkstücke dimensionell vermessen werden können.

Sensoren oder Dreh-/Schwenkgelenke werden auch als Tastköpfe bezeichnet und Tastköpfe als Sensoren oder Dreh-/ Schwenkgelenke.

Taktile Tastköpfe bestehen aus einem festen Teil, der mit einer Achse des Koordinatenmessgerätes, in der Regel mit einer Pinole, fest oder lösbar fest verbunden ist, sowie aus einem gegenüber dem festen Teil beweglichen Teil, der einen sogenannten Taststift trägt, der aus einem länglichen Schaft besteht und an dessen einem Ende ein Antastelement wie zum Beispiel eine Kugel, die sogenannte Antastkugel befestigt ist. Andere Antastelemente sind zum Beispiel Spitzen oder Kugelscheiben. Mit dem anderen Ende ist der Taststift an dem beweglichen Teil des Tastkopfes befestigt, der sich gegenüber dem festen Teil verschiebt, wenn das Antastelement mit der Oberfläche eines Werkstückes in Kontakt kommt. Überschreitet die Auslenkung des Taststiftes einen vorgegebenen Wert, wird eine Antastung an dem Werkstück detektiert.

Bei den sogenannten messenden Tastköpfen ist ebenfalls ein fester Teil, der mit einer Achse des Koordinatenmessgerätes, in der Regel mit einer Pinole, fest oder lösbar fest verbunden ist, und ein gegenüber dem festen Teil beweglicher Teil vorgesehen. Mit Hilfe geeigneter Messmittel wird die Auslenkung des beweglichen Teils in Relation zu dem festen Teil kontinuierlich gemessen. Bei den sogenannten schaltenden Tastköpfen wird eine Auslenkung lediglich mittels eines elektrischen Schaltimpulses angezeigt. Auf den beweglichen Teil des Tastkopfes wirken Rückstellkräfte, damit der Tastkopf sich in einer definierten Lage gegenüber dem festen Teil des Tastkopfes befindet, wenn keine äußeren Kräfte auf den Taststift wirken.

Darüber hinaus gehören zum Stand der Technik (DE 10 2004 010 083 B4) Koordinatenmessgeräte, bei denen die Tastköpfe Schaukeln aufweisen, die über Federparallelogrammbleche miteinander verbunden sind.

Um möglichst viele unterschiedliche Messaufgaben erfüllen zu können, besitzen taktile oder messende Tastköpfe eine mechanische Schnittstelle, in die verschiedene Taststiftkonfigurationen eingesetzt oder automatisch eingewechselt werden können.

Zum Stand der Technik (DE 10 2007 054 915 A1) gehören darüber hinaus optische Sensoren, mit denen ein berührungsloses optisches Messverfahren durchgeführt werden kann.

Um komplexe Messobjekte, wie zum Beispiel Motorblöcke mit einem Koordinatenmessgerät vermessen zu können, ist nicht nur ein häufiger Wechsel der Taststiftkonfigurationen erforderlich, sondern auch ein relativ häufiger Wechsel des Tastkopfes oder Sensors. Der Tastkopf oder Sensor ist üblicherweise an einer Pinole des Koordinatenmessgerätes angeordnet. In sogenannten Tastkopf- oder Sensorhalterungen können verschiedene Tastköpfe oder Sensoren für verschiedene Messaufgaben gelagert sein. Diese Tastköpfe oder Sensoren werden häufig vollautomatisch von dem Koordinatenmessgerät eingewechselt, je nachdem, welche Messaufgabe die Einwechselung eines bestimmten Tastkopfes oder Sensors erforderlich macht. Es kann jedoch auch ein manueller Wechsel durchgeführt werden.

Bei der Aufnahme von Dreh-/Schwenkgelenken oder Tastköpfen oder Sensoren aus einer so genannten Garage, das heißt einer Vorrichtung zum Lagern von gerade nicht benötigten Dreh-/Schwenkgelenken oder Tastköpfen oder Sensoren oder Taststiften werden viele Bewegungen des Koordinatenmessgerätes in mindestens zwei Achsen ausgeführt, wie zum Beispiel das Einfädeln eines Klemmhakens, das Bewegen eines Klemmhakens und das Ausfädeln der Taststiftaufnahme aus dem Halter.

Die aus der Praxis bekannten Koordinatenmessgeräte, insbesondere die Koordinatenmessgeräte, die in Portalbauweise aufgebaut sind, weisen eine Pinole auf, an der der Tastkopf oder Sensor oder das Dreh-/Schwenkgelenk auswechselbar angeordnet ist.

Aus der Praxis sind auch Ausführungsformen bekannt, bei denen an der Pinole ein so genanntes Interface angeordnet ist. An dem Interface wird das Dreh-/Schwenkgelenk oder der Tastkopf oder der Sensor auswechselbar angeordnet.

Insbesondere bei Koordinatenmessgeräten in Portalbauweise, die eine automatisierte oder manuelle Tastkopfwechselvorrichtung aufweisen, wie zum Beispiel gemäß der DE 10 2019 122 049 A1 wird durch die Tastkopfwechselvorrichtung die definierte Messhöhe, die durch das Koordinatenmessgerät in Portalbauweise festgelegt ist, reduziert. Damit wird die zur Verfügung stehende Höhe für den Messbereich durch eine Tastkopfwechselvorrichtung reduziert.

Das bedeutet, dass bei einem reduzierten Messraum die Anwender auf größere Koordinatenmessgeräte zurückgreifen müssen, welche wiederum teurer sind und größere Messfehler aufweisen.

Das der Erfindung zugrunde liegende technische Problem besteht darin, ein Koordinatenmessgerät anzugeben, welches einen Tastkopf oder einen Sensor oder ein Dreh-/Schwenkgelenk oder ein Dreh-/Schwenkgelenk mit einem an dem Dreh-/ Schwenkgelenk angeordneten Tastkopf oder Sensor und/oder ein Interface aufweist, und welches trotzdem einen großen Messraum aufweist.

Dieses technische Problem wird durch ein Koordinatenmessgerät mit den Merkmalen gemäß Anspruch 1 gelöst.

Das erfindungsgemäße Koordinatenmessgerät mit einer Pinole und
- einem Tastkopf oder
- einem Sensor oder
- einem Dreh-/Schwenkgelenk oder
- einem Dreh-/Schwenkgelenk mit einem an dem Dreh-/

Schwenkgelenk angeordneten Tastkopf oder Sensor und/oder
- einem Interface
zeichnet sich dadurch aus, dass der Tastkopf oder der Sensor oder ein Adapter des Dreh-/Schwenkgelenkes und/oder das Interface wenigstens teilweise in der Pinole angeordnet sind/ist.

Die Pinole ist üblicherweise rohrförmig ausgebildet. In der Pinole sind häufig elektrische Leitungen oder beispielsweise Glasfaserkabel angeordnet, die nicht geknickt werden dürfen. In der Pinole ist jedoch ausreichend Platz, um ein Interface oder einen Tastkopf oder einen Sensor oder einen Adapter eines Dreh-/Schwenkgelenkes zumindest teilweise in der Pinole anzuordnen. Es ist in der Pinole ausreichend Platz, um ein Interface mit einem Tastkopf oder mit einem Sensor oder mit einem Adapter eines Dreh-/ Schwenkgelenkes zumindest teilweise in der Pinole anzuordnen.

Durch diese Ausbildung wird Platz eingespart, der als Messraum zur Vermessung von Werkstücken zur Verfügung steht.

Durch diese erfindungsgemäße Ausführungsform des Koordinatenmessgerätes wird der Messraum vergrößert, so dass größere Werkstücke vermessen werden können.

Gemäß der Erfindung können der Tastkopf oder der Sensor oder der Adapter des Dreh-/Schwenkgelenkes oder das Interface wenigstens teilweise in der Pinole angeordnet sein.

Bei dem Dreh-/Schwenkgelenk ist vorteilhaft ein Teil des Dreh-/Schwenkgelenkes, nämlich der feststehende Teil des Dreh-/Schwenkgelenkes, wenigstens teilweise in der Pinole angeordnet. Der feststehende Teil des Dreh-/Schwenkgelenkes wird als Adapter bezeichnet.

An dem Dreh-/Schwenkgelenk ist vorteilhaft ein Tastkopf oder ein Sensor angeordnet. Der Tastkopf oder der Sensor ist vorteilhaft auswechselbar an dem Dreh-/ Schwenkgelenk angeordnet.

Ist ein Interface vorgesehen, kann vorteilhaft der Tastkopf oder der Sensor oder das Dreh-/Schwenkgelenk austauschbar wenigstens teilweise in dem Interface mit einer vorzugsweise reproduzierbaren Lagerung angeordnet werden.

Ist kein Interface vorgesehen, kann der Tastkopf, der Sensor oder das Dreh-/Schwenkgelenk wenigstens teilweise in der Pinole austauschbar mit einer vorzugsweisen reproduzierbaren Lagerung angeordnet werden.

Ist ein Interface vorgesehen, kann dieses lösbar fest wenigstens teilweise in der Pinole angeordnet sein. Die lösbar feste Verbindung ist eine Verbindung, die zerstörungsfrei gelöst werden kann. Es kann sich beispielsweise um eine Verbindung mittels Schrauben oder um eine Klemmverbindung handeln.

Es besteht auch die Möglichkeit, den Tastkopf, den Sensor oder das Dreh-/Schwenkgelenk lösbar fest wenigstens teilweise in der Pinole anzuordnen.

Gemäß einer weiteren vorteilhaften Ausführungsform ist das Interface wenigstens teilweise in der Pinole angeordnet und der Tastkopf oder der Sensor oder der Adapter des Dreh-/Schwenkgelenkes ist wenigstens teilweise in dem Interface angeordnet.

Diese Ausführungsform weist den Vorteil auf, dass eine erhebliche Platzersparnis erzielt wird. Dadurch, dass der Tastkopf oder der Sensor oder der Adapter des Dreh-/ Schwenkgelenkes wenigstens teilweise in dem Interface und das Interface wiederum wenigstens teilweise in der Pinole angeordnet sind, wird das Messvolumen des Koordinatenmessgerätes deutlich vergrößert.

Gemäß einer weiteren vorteilhaften Ausführungsform der Erfindung ist der Tastkopf oder der Sensor oder der Adapter des Dreh-/Schwenkgelenkes und/oder das Interface vollständig in der Pinole angeordnet. An dem Interface können der Tastkopf oder der Sensor oder das Dreh-/Schwenkgelenk vorteilhaft reproduzierbar austauschbar angeordnet sein.

Gemäß einer anderen vorteilhaften Ausführungsform können das Interface und der Tastkopf oder das Interface und der Sensor oder das Interface und der Adapter des Dreh-/ Schwenkgelenkes vollständig in der Pinole angeordnet sein.

Durch diese Ausführungsform wird die größte Zunahme an dem Messraum in Z-Richtung, das heißt in Richtung der Längsachse der Pinole, erreicht.

Mit dem erfindungsgemäßen Koordinatenmessgerät ist ein "Versenken" des Tastkopfes oder des Sensors oder des Adapters des Dreh-/Schwenkgelenkes oder des Interface zumindest teilweise in der Pinole möglich.

Gemäß einer bevorzugten Ausführungsform der Erfindung ist vorgesehen, dass das Interface lösbar fest in der Pinole angeordnet ist und wenigstens teilweise der Tastkopf oder der Sensor oder der Adapter des Dreh-/Schwenkgelenkes reproduzierbar auswechselbar an oder in dem Interface anordbar ist.

Das Interface kann beispielsweise über eine Schraubverbindung in der Pinole oder zumindest teilweise in der Pinole angeordnet sein. Die Schraubverbindung selbst kann in der Pinole, an der Pinole oder außerhalb der Pinole angeordnet sein. Gemäß einer besonders bevorzugten Ausführungsform der Erfindung ist das Interface wenigstens teilweise in der Pinole angeordnet und der an dem Interface angeordnete Tastkopf oder Sensor oder der Adapter des Dreh-/ Schwenkgelenkes ist wenigstens teilweise in dem Interface und damit ebenfalls zumindest teilweise in der Pinole angeordnet.

Eine weitere Ausführungsform besteht darin, dass das Interface lediglich teilweise in der Pinole angeordnet ist oder dass der Tastkopf oder Sensor oder der Adapter des Dreh-/Schwenkgelenkes lediglich teilweise in der Pinole angeordnet ist.

Ist ein Interface vorgesehen, an dem wiederum ein Tastkopf oder Sensor oder ein Dreh-/Schwenkgelenk angeordnet ist, besteht die Möglichkeit, das Interface vollständig in der Pinole anzuordnen und den an dem Interface angeordneten Tastkopf oder Sensor oder Adapter des Dreh-/Schwenkgelenkes teilweise in der Pinole anzuordnen. Es besteht auch die Möglichkeit, das Interface und den am Interface angeordneten Tastkopf oder Sensor oder den Adapter des Dreh-/Schwenkgelenkes vollständig in der Pinole anzuordnen.

Gemäß einer weiteren vorteilhaften Ausführungsform der Erfindung ist vorgesehen, dass der Tastkopf oder der Sensor oder das Dreh-/Schwenkgelenk reproduzierbar austauschbar und wenigstens teilweise in der Pinole angeordnet sind/ist.

Ist kein Interface vorgesehen, ist der Tastkopf oder Sensor oder der Adapter des Dreh-/Schwenkgelenkes reproduzierbar austauschbar oder lösbar fest zumindest teilweise in der Pinole angeordnet.

Ist ein Interface vorgesehen, so kann dieses zumindest teilweise in der Pinole angeordnet sein.

Gemäß einer vorteilhaften Ausführungsform der Erfindung ist vorgesehen, dass der auswechselbare Tastkopf oder der Sensor oder das Dreh-/Schwenkgelenk an dem Interface reproduzierbar gelagert ist, oder dass der auswechselbare Tastkopf oder der Sensor oder das Dreh-/Schwenkgelenk an der Pinole reproduzierbar gelagert ist.

Durch diese Ausführungsform ist eine Platz sparende Anordnung des Tastkopfes oder des Sensors oder des Adapters des Dreh-/Schwenkgelenkes möglich, wodurch der Messraum des Koordinatenmessgerätes vergrößert wird und zeitgleich ist der Wechsel des Tastkopfes oder des Sensors oder des Dreh-/ Schwenkgelenkes mit hoher Präzision möglich

Gemäß einer vorteilhaften Ausführungsform der Erfindung ist vorgesehen, dass Lager zur reproduzierbaren Lagerung am tastkopfseitigen oder sensorseitigen oder dreh-/ schwenkgelenkseitigen Ende des Interface oder der Pinole angeordnet sind. Das bedeutet, dass die Lager am Ende der Pinole gut zugänglich angeordnet sind.

Gemäß einer weiteren Ausführungsform der Erfindung ist vorgesehen, dass die Lager zur reproduzierbaren Lagerung am tastkopfseitigen oder sensorseitigen oder dreh-/schwenkgelenkseitigen Ende des Interface oder der Pinole und außerhalb des Interface oder außerhalb der Pinole oder innerhalb des Interface oder innerhalb der Pinole angeordnet sind.

Am tastkopfseitigen oder sensorseitigen oder dreh-/ schwenkgelenkseitigen Ende der Pinole ist der Tastkopf oder Sensor oder das Dreh-/Schwenkgelenk oder das Interface angeordnet. An diesem Ende ist gemäß der vorteilhaften Ausführungsform der Erfindung auch die Dreipunktlagerung vorgesehen.

Gemäß einer weiteren vorteilhaften Ausführungsform der Erfindung sind die Lager am tastkopfseitigen oder sensorseitigen oder dreh-/schwenkgelenkseitigen Ende des Interface oder der Pinole und außerhalb der Pinole angeordnet. Hierdurch ist eine gute Zugänglichkeit der Lager gewährleistet, um sie beispielsweise bei einer Verschmutzung einfach säubern zu können.

Die Lager können auch in der Pinole am tastkopfseitigen oder sensorseitigen oder dreh-/schwenkgelenkseitigen Ende der Pinole angeordnet sein. Hierdurch erreicht man die größte Platzersparnis.

Gemäß einer bevorzugten Ausführungsform ist die Befestigungsvorrichtung für das Interface außerhalb der Pinole am lagerfernen Ende des Tastkopfes oder Sensors oder des Dreh-/Schwenkgelenkes angeordnet. Die Befestigungsvorrichtung kann aus Schrauben gebildet sein oder als Klemmvorrichtung ausgebildet sein.

Die Befestigungsvorrichtung für das Interface, für den Tastkopf, für den Sensor oder für das Dreh-/Schwenkgelenk ist vorteilhaft innerhalb der Pinole am lagerfernen Ende des Tastkopfes oder Sensors oder des Dreh-/Schwenkgelenkes angeordnet.

Die Befestigungsvorrichtung des Interface für den Tastkopf, für den Sensor oder für das Dreh-/Schwenkgelenk ist vorteilhaft wenigstens teilweise innerhalb der Pinole am lagerfernen Ende des Tastkopfes oder Sensors oder des Dreh-/Schwenkgelenkes angeordnet.

Gemäß einer besonders bevorzugten Ausführungsform der Erfindung ist vorgesehen, dass die Lager als Dreipunktlager ausgebildet sind. Der auswechselbare Tastkopf oder der Sensor oder das Dreh-/Schwenkgelenk ist vorteilhaft an dem Interface mittels einer Dreipunktlagerung reproduzierbar gelagert, oder der auswechselbare Tastkopf oder der Sensor oder das Dreh-/Schwenkgelenk ist vorteilhaft an der Pinole mittels einer Dreipunktlagerung reproduzierbar gelagert.

Es kann an Stelle der Dreipunktlagerung auch eine andere reproduzierbare Lagerung vorgesehen sein.

Bei der reproduzierbaren Lagerung sind ein Lager und ein Gegenlager vorgesehen. Lager und Gegenlager weisen zusammenwirkende Elemente auf zur Ausbildung einer reproduzierbaren Verbindung.

Hierdurch wird gewährleistet, dass eine Genauigkeit im Mikrometerbereich erreicht wird.

Eine Dreipunktlagerung besteht beispielsweise aus drei Kugeln oder Kugelabschnitten, die mit V-Lagern oder mit einem Planlager, Trippellager und V-Lager in Eingriff stehen. An Stelle eines V-Lagers können auch zwei parallel zueinander angeordnete Zylinder vorgesehen sein. Bei der Dreipunktlagerung liegen die Kugeln oder Kugelabschnitte insgesamt mit sechs Lagerpunkten an den Gegenlagern an.

Durch diese reproduzierbare hochpräzise Lagerung kann ein Rekalibrieren nach einem Sensorwechsel entfallen.

Die Lagerung und die Befestigungsvorrichtung wirken zusammen. Durch dieses Zusammenwirken eines Rückhaltekraftsystems mit der genauen Positionierung wird die reproduzierbare Lagerung ausgebildet.

Wie schon ausgeführt, können die Lager als Dreipunktlager ausgebildet sein. Andere Ausführungsformen von Lagern sind ebenfalls möglich.

Gemäß einer weiteren vorteilhaften Ausführungsform der Erfindung ist vorgesehen, dass eine Befestigungsvorrichtung zur lösbaren und reproduzierbaren Befestigung des Tastkopfes oder Sensors oder des Dreh-/Schwenkgelenkes in der Pinole am lagerfernen Ende des Tastkopfes oder Sensors oder des Dreh-/Schwenkgelenkes vorgesehen ist.

Wie schon ausgeführt, ist die Lagerung am tastkopfseitigen oder sensorseitigen oder dreh-/schwenkgelenkseitigen Ende der Pinole angeordnet. Die Befestigungsvorrichtung für den Tastkopf, den Sensor oder das Dreh-/Schwenkgelenk ist innerhalb der Pinole angeordnet. Die Befestigungsvorrichtung ist in axialer Richtung der Pinole gesehen mit Abstand zu dem tastkopfseitigen oder sensorseiteigen oder dreh-/ schwenkgelenkseitigen fernen Ende der Pinole angeordnet. Gleiches gilt für ein Interface, wenn ein Interface vorgesehen ist. Die Befestigungsvorrichtung des Interface für den Tastkopf oder den Sensor oder das Dreh-/Schwenkgelenk ist wenigstens teilweise innerhalb der Pinole angeordnet, und zwar in axialer Richtung der Pinole gesehen mit Abstand zu der Lagerung am tastkopfseitigen oder sensorseitigen oder dreh-/schwenkgelenkseitigen fernen Ende der Pinole. Die Befestigungsvorrichtung ist in axialer Richtung in der Pinole so weit von der Lagerung entfernt angeordnet, dass der Tastkopf oder Sensor oder das Dreh-/Schwenkgelenk teilweise oder vollständig in der Pinole angeordnet ist.

Das Interface kann auch teilweise oder vollständig in der Pinole angeordnet sein. Es können auch der Tastkopf, der Sensor oder der Adapter des Dreh-/Schwenkgelenkes teilweise oder vollständig in dem Interface angeordnet sein.

Die Befestigungsvorrichtung für das Interface, den Tastkopf oder Sensor oder Dreh-/Schwenkgelenk weist vorteilhaft für eine lösbare Verbindung ein erstes Element der Pinole und ein zweites Element auf, wobei das zweite Element mit dem Interface oder dem Tastkopf oder Sensor oder Dreh-/Schwenkgelenk verbunden ist. Das erste und das zweite Element sind so ausgebildet, dass sie lösbar miteinander verbindbar sind.

Ist ein Interface vorgesehen, besteht auch die Möglichkeit, dass ein erstes Element an dem Interface und das zweite Element an dem Tastkopf oder dem Sensor oder dem Adapter des Dreh-/Schwenkgelenks angeordnet ist. Das erste und das zweite Element sind so ausgebildet, dass sie lösbar miteinander verbindbar sind, um eine Haltekraft aufzubringen.

Die Befestigungsvorrichtung des Interface kann gemäß einer vorteilhaften Ausführungsform als Haken ausgebildet sein. Es besteht auch die Möglichkeit, andere Befestigungsvorrichtungen, wie zum Beispiel Magneten oder Elektromagneten zu verwenden.

Ist ein Haken vorgesehen, weist der Tastkopf, der Sensor oder der Adapter für das Dreh-/Schwenkgelenk eine entsprechende Aufnahme für den Haken auf. Der Haken muss in der Aufnahme eingefädelt werden zum Fixieren des Tastkopfes, des Sensors oder des Dreh-/Schwenkgelenks. Beim Lösen des Tastkopfes, Sensors oder des Dreh-/Schwenkgelenkes muss der Haken wieder ausgefädelt werden.

Gemäß einer vorteilhaften Ausführungsform der Erfindung wird der Haken beim Öffnen seitlich ausgeschwenkt. Beim Fixieren des Sensors, Tastkopfes oder des Dreh-/ Schwenkgelenks wird der Haken aus einer seitlichen Position in eine Position geschwenkt, um in eine Aufnahme für den Haken an dem Tastkopf, dem Sensor oder dem Adapter des Dreh-/Schwenkgelenks zu greifen.

Der Haken kann in der Pinole für den Tastkopf, den Sensor oder das Dreh-/Schwenkgelenk angeordnet sein. Es besteht auch die Möglichkeit, dass der Haken in dem Interface für den Tastkopf, den Sensor oder das Dreh-/Schwenkgelenk angeordnet ist.

Wie schon ausgeführt, ist der Befestigungsmechanismus des Interface, der beispielsweise als Klemmmechanismus oder als Schraubverbindung ausgebildet sein kann, in der Pinole angeordnet. Auch andere Verbindungen sind möglich.

Gemäß einer weiteren vorteilhaften Ausführungsform der Erfindung ist wenigstens ein Sensor für die Überwachung eines Schließzustandes der Befestigungsvorrichtung vorgesehen. Insbesondere wenn ein Haken vorgesehen ist, wird über den wenigstens einen Sensor die Überwachung der Position des Hakens (offen/geschlossen) durchgeführt. Gemäß einer besonders bevorzugten Ausführungsform der Erfindung ist der wenigstens eine Sensor als Hall-Sensor ausgebildet.

Der vorteilhaft vorgesehene wenigstens eine Sensor für die Überwachung des Schließzustandes der Befestigungsvorrichtung kann in der Pinole oder in dem Interface angeordnet sein. Es wird der Schließzustand der Befestigungsvorrichtung des Interface oder der Pinole für den Tastkopf oder den Sensor oder das Dreh-/Schwenkgelenk überwacht.

Gemäß einer weiteren vorteilhaften Ausführungsform der Erfindung ist vorgesehen, dass eine Notentriegelung für das Interface vorgesehen ist. Es kann auch eine Notentriegelung für den Tastkopf oder den Sensor oder das Dreh-/Schwenkgelenk vorgesehen sein, wenn kein Interface vorgesehen ist.

Gemäß einer bevorzugten Ausführungsform ist vorteilhaft vorgesehen, dass eine Mechanik zur Demontage vorgesehen ist. Das Interface und der Tastkopf oder das Interface und der Sensor oder Interface und das Dreh-/Schwenkgelenk oder der Tastkopf oder der Sensor oder das Dreh-/Schwenkgelenk, die wenigstens teilweise in der Pinole angeordnet sind, können mit der Mechanik zur Demontage des Interface mit dem Tastkopf oder des Interface mit dem Sensor oder des Interface mit dem Dreh-/Schwenkgelenk oder des Tastkopfes oder des Sensors oder des Dreh-/Schwenkgelenkes gelöst werden. Lässt sich in einem Fehlerfall die Befestigungsvorrichtung des Interface mit eingebautem Tastkopf oder Sensor oder Dreh-/Schwenkgelenk oder der Tastkopf oder der Sensor oder das Dreh-/Schwenkgelenk nicht lösen, muss das Interface als Einheit mit dem Tastkopf oder dem Sensor oder dem Dreh-/Schwenkgelenk oder der Tastkopf oder der Sensor oder das Dreh-/Schwenkgelenk aus der Pinole entfernt werden, um die Befestigungsvorrichtung zu kontrollieren und gegebenenfalls zu reparieren.

Hierzu ist eine Mechanik, beispielsweise bestehend aus Schrauben vorgesehen, damit das Interface mit dem Tastkopf oder mit dem Sensor oder mit dem Dreh-/Schwenkgelenk oder der Tastkopf oder der Sensor oder Dreh-/Schwenkgelenk mit der geschlossenen Befestigungsvorrichtung aus der Pinole entfernbar ist.

Besonders bevorzugt ist das Interface zusammen mit dem an dem Interface angeordneten Tastkopf oder dem an dem Interface angeordneten Sensor oder mit dem an dem Interface angeordneten Dreh-/Schwenkgelenk aus der Pinole entfernbar.

Gemäß einer weiteren vorteilhaften Ausführungsform der Erfindung ist vorgesehen, dass eine Lichtschranke für die Erkennung des Tastkopfes oder des Sensors oder des Dreh-/ Schwenkgelenkes nach einem Einwechseln des Tastkopfes oder des Sensors oder des Dreh-/Schwenkgelenkes vorgesehen ist.

Gemäß dieser Ausführungsform wird das Schließen der Befestigungsvorrichtung, beispielsweise des Hakens oder die Krafterzeugung durch einen Magneten nach dem korrekten Einführen des Tastkopfes, des Sensors oder des Dreh-/Schwenkgelenkes durch eine Lichtschranke ausgelöst.

Mit der Befestigungsvorrichtung des Interface wird eine kraftschlüssige Verbindung innerhalb der Pinole ermöglicht, wobei die formschlüssige Verbindung über die Dreipunktauflage am tastkopfseitigen Ende der Pinole ausgebildet ist.

Gemäß einer weiteren vorteilhaften Ausführungsform der Erfindung ist wenigstens ein zusätzlicher Versorgungsanschluss für den Tastkopf oder den Sensor oder das Dreh-/ Schwenkgelenk oder das Interface in der Ebene der Lagerung angeordnet. Die Lagerung kann vorteilhaft als Dreipunktlagerung ausgebildet sein. Die Ebene der Lagerung, vorzugsweise der Dreipunktauflage ist vorteilhaft außerhalb der Pinole angeordnet. In der Ebene der Lagerung, vorzugsweise der Dreipunktauflage, können auch die elektrischen Kontakte und/oder ein Pneumatik-Anschluss und/oder ein Hydraulik-Anschluss und/oder optischer Anschluss angeordnet sein.

Eine weitere vorteilhafte Ausführungsform der Erfindung sieht vor, dass eine optische Schnittstelle von der Ebene der Lagerung ausgehend in axialer Richtung der Pinole in Richtung der Befestigungsvorrichtung verschoben angeordnet ist. Die Lagerung kann vorteilhaft eine Dreipunktlagerung sein. Das bedeutet, dass die optische Schnittstelle vorteilhaft innerhalb der Pinole angeordnet ist. Grundsätzlich kann die optische Schnittstelle jedoch auch in der Ebene der Lagerung, vorzugsweise der Dreipunktlagerung angeordnet sein.

Die Lager können vorteilhaft außerhalb der Pinole angeordnet sein. Es ist auch möglich, die Lager innerhalb der Pinole anzuordnen.

Vorteilhaft ist vorgesehen, dass der Tastkopf oder der Sensor oder das Dreh-/Schwenkgelenk in das Interface automatisch oder manuell einwechselbar ausgebildet sind.

Besonders bevorzugt findet der Wechsel des Tastkopfes oder des Sensors oder des Dreh-/Schwenkgelenkes in das Interface oder an der Pinole automatisiert statt.

Es ist jedoch auch möglich, eine manuelle Einwechselung vorzunehmen.

Eine automatisierte Einwechselung weist den Vorteil auf, dass Messprozesse vollautomatisch durchlaufen werden können und jeweils der erforderliche Tastkopf oder Sensor oder Dreh-/Schwenkgelenk eingewechselt werden können.

Bei einem manuellen Einwechseln kann vorteilhaft eine zusätzliche optische Kontrolle durch eine Bedienperson durchgeführt werden.

Gemäß einer weiteren vorteilhaften Ausführungsform der Erfindung ist vorgesehen, dass für ein manuelles Einwechseln des Tastkopfes oder des Sensors oder des Dreh-/ Schwenkgelenkes ein Schalter zum Auslösen eines Wechselvorganges vorgesehen ist. Dieser Schalter dient der Sicherheit beim manuellen Wechseln. Es handelt sich um eine Art "Zustimmschalter", der den manuellen Wechsel des Tastkopfes oder des Sensors oder des Dreh-/Schwenkgelenkes auslöst.

Gemäß einer vorteilhaften Ausführungsform der Erfindung ist vorgesehen, dass die Befestigungsvorrichtung, vorzugsweise des Interface während des Betriebes nicht mit Energie beaufschlagt werden muss. Beispielsweise kann die Befestigungsvorrichtung als Haken ausgebildet sein, der mit einer Druckfeder den Tastkopf oder den Sensor oder das Dreh-/Schwenkgelenk sicher in einer Position hält, ohne dass eine weitere Zufuhr von Energie oder beispielsweise Luft während des Messvorganges erforderlich ist.

Das Entfernen des Tastkopfes oder des Sensors oder des Dreh-/Schwenkgelenkes aus dem Interface wird vorteilhaft durch einen Software-Befehl eingeleitet. Bei einem manuellen Wechsel ist - wie schon beschrieben - vorteilhaft das Betätigen eines Schalters erforderlich. Anschließend wird dem System Energie zugeführt, beispielsweise wird Druck auf die Druckfeder ausgeübt, so dass sich der Haken öffnet und der Sensor oder der Tastkopf oder das Dreh-/Schwenkgelenk aus dem Interface freigegeben wird.

Gemäß einer weiteren Ausführungsform der Erfindung ist vorgesehen, dass die Befestigungsvorrichtung des Interface während des Betriebes mit Energie beaufschlagt werden muss. Diese Ausführungsform hat den Vorteil, dass ein Lösen der Befestigungsvorrichtung durch Abschalten der Energiezufuhr möglich ist.

Gemäß einer weiteren vorteilhaften Ausführungsform der Erfindung ist vorgesehen, dass an der Pinole oder an dem Interface oder dem Tastkopf oder dem Sensor oder dem Dreh-/ Schwenkgelenk wenigstens ein Zentrierstift vorgesehen ist. Vorzugsweise sind wenigstens zwei Zentrierstifte vorgesehen.

Durch den Zentrierstift ist es möglich, den Tastkopf oder den Sensor oder das Dreh-/Schwenkgelenk beim Einsetzen in das Interface oder an der Pinole vorzuzentrieren.

Sind asymmetrisch angeordnete Zentrierstifte vorgesehen, kann der Tastkopf oder der Sensor oder das Dreh-/ Schwenkgelenk im Interface nicht verdreht, das heißt falsch eingesetzt werden.

Wie schon ausgeführt, ist die Befestigungsvorrichtung für den Tastkopf oder den Sensor oder das Dreh-/Schwenkgelenk in dem Interface oder in der Pinole angeordnet, das heißt in axialer Richtung der Pinole gesehen von dem tastkopfseitigen Ende der Pinole mit Abstand angeordnet. Grundsätzlich ist es möglich, auch die Schnittstellen zum Beispiel für Luft, für die Elektronik, für die Hydraulik oder optische Verbindungen in dieser Ebene anzuordnen.

Mit dem tastkopfseitigen Ende der Pinole ist das Ende gemeint, in dem der Tastkopf oder der Sensor oder das Dreh-/Schwenkgelenk oder das Interface wenigstens teilweise angeordnet ist.

Beim Einführen des Sensors oder des Tastkopfes oder des Adapters des Dreh-/Schwenkgelenkes in das Interface oder in die Pinole wird die Endlage des Sensors, des Tastkopfes oder des Adapters des Dreh-/Schwenkgelenkes automatisch erkannt, so dass die Fixierung des Tastkopfes, des Sensors oder des Dreh-/Schwenkgelenkes im Interface oder in der Pinole durchgeführt werden kann.

Wie schon ausgeführt, können Tastköpfe als taktile Tastköpfe ausgebildet. Es können auch Tastköpfe vom messenden Typ vorgesehen sein.

Die Sensoren können beispielsweise optische Punktsensoren, Kameras zur Bildverarbeitung, Rauheitssensoren, Triangulationssensoren oder Barkhausen-Sensoren usw. sein.

Diese Tastköpfe oder Sensoren werden je nach Bedarf der Messaufgabe eingewechselt. Es können auch Dreh-/ Schwenkgelenke vorgesehen sein.

Findet ein automatisierter Wechsel der Tastköpfe oder Sensoren oder der Dreh-/Schwenkgelenke statt, werden Messungenauigkeiten verringert und die Messzeit bei kombinierten Messungen (optisch/taktil) verringert sich ebenfalls.

Gemäß einer weiteren vorteilhaften Ausführungsform der Erfindung ist vorgesehen, dass an dem Interface oder an dem Tastkopf oder an dem Sensor oder an dem Dreh-/Schwenkgelenk zumindest segmentweise eine optische Statusanzeige angeordnet ist.

Die optische Statusanzeige ist vorteilhaft als Leuchte, Lichtführung und/oder Lichtring ausgebildet. Gemäß einer bevorzugten Ausführungsform weist die optische Statusanzeige wenigstens eine LED auf.

Vorteilhaft ist die optische Statusanzeige am befestigungsfernen Ende des Interface, des Tastkopfes oder des Sensors oder des Dreh-/Schwenkgelenkes angeordnet.

Mit der optischen Statusanzeige kann beispielsweise die vollständige und ordnungsgemäße Anordnung des Tastkopfes oder des Sensors oder des Adapters des Dreh-/Schwenkgelenkes an dem Interface oder in der Pinole oder die Funktionsfähigkeit des Interface, des Tastkopfes oder des Sensors oder des Dreh-/Schwenkgelenkes oder der Status/Fortschritt der Messung angezeigt werden

Gemäß einer weiteren vorteilhaften Ausführungsform der Erfindung ist vorgesehen, dass in und/oder an dem Interface eine Schutzvorrichtung für den Tastkopf oder den Sensor oder das Dreh-/Schwenkgelenk vorgesehen ist.

Gemäß einer weiteren vorteilhaften Ausführungsform der Erfindung ist vorgesehen, dass in und/oder an der Pinole eine Schutzvorrichtung für das Interface oder den Tastkopf oder den Sensor oder das Dreh-/Schwenkgelenk vorgesehen ist.

Diese Schutzvorrichtung ist vorgesehen, um das wenigstens teilweise in der Pinole angeordnete Interface oder den wenigstens teilweise in der Pinole angeordneten Tastkopf oder den wenigstens teilweise in der Pinole angeordneten Sensor oder das wenigstens teilweise in der Pinole angeordnete Dreh-/Schwenkgelenk beim Wechseln vor Schäden durch Kollision mit einer Innenfläche der Pinole zu schützen.

Besonders vorteilhaft ist in und/oder an dem Interface eine Schutzvorrichtung vorgesehen, die den einwechselbaren Tastkopf oder den einwechselbaren Sensor oder das einwechselbare Dreh-/Schwenkgelenk vor Schäden durch Kollision mit einer Innenfläche des Interface schützt.

Die Schutzvorrichtung ist vorteilhaft aus einem Material gebildet, welches eine geringe Oberflächenrauigkeit aufweist. Hierdurch kann der Tastkopf oder der Sensor oder das Dreh-/Schwenkgelenk an der Schutzvorrichtung ohne Schaden entlanggleiten, falls es zu einem Kontakt kommt.

Die Schutzvorrichtung ist vorteilhaft aus einem Kunststoff gebildet. Kunststoff weist eine geringe Oberflächenrauigkeit auf. Kunststoff weist eine geringere Härte als Metall auf, so dass ein Gehäuse des Tastkopfes oder des Sensors oder des Interface, die üblicherweise aus Metall bestehen, bei Berührung mit der Schutzvorrichtung nicht beschädigt werden.

Das Interface ist vorteilhaft als universelle Tastkopf- oder Sensorschnittstelle oder Dreh-/Schwenkgelenk-Schnittstelle ausgebildet, bestehend aus mechanischer, elektronischer, optischer, pneumatischer und/oder hydraulischer Kopplung zwischen Interface und Tastkopf oder Interface und Sensor oder Interface und Dreh-/Schwenkgelenk.

Weitere Merkmale und Vorteile der Erfindung ergeben sich anhand der zugehörigen Zeichnungen, in denen verschiedene Ausführungsformen eines erfindungsgemäßen Koordinatenmessgerätes nur beispielhaft dargestellt sind, ohne die Erfindung auf diese Ausführungsbeispiele zu beschränken. In den Zeichnungen zeigen:
- Fig. 1: ein Koordinatenmessgerät in Portalbauweise in perspektivischer Ansicht;
- Fig. 2: eine Pinole mit Interface, Tastkopf und Tast-stifthalter, teilweise im Längsschnitt;
- Fig. 3: eine perspektivische Ansicht einer Sensor-/ Tastkopf-/Dreh-/Schwenkgelenkhalterung in einer Pinole ohne Pinolengehäuse;
- Fig. 4: eine Teilansicht der Fig. 3 mit Haken und Zentrierstiften;
- Fig. 5: eine weitere Teilansicht der Fig. 3;
- Fig. 6: eine Dreipunktlagerung im Längsschnitt;
- Fig. 7: eine Dreipunktlagerung in Draufsicht;
- Fig. 8: ein Gegenstück zur Dreipunktlagerung der Fig. 7 in Draufsicht;
- Fig. 9: Vorrichtungen mit Zentrierstiften im Längsschnitt;
- Fig. 10: einen Längsschnitt durch eine Pinole mit Interface und Tastkopf und Taststiftaufnahme;
- Fig. 11: ein geändertes Ausführungsbeispiel einer Pinole mit Interface und Tastkopf und Taststiftaufnahme im Längsschnitt;
- Fig. 12: ein geändertes Ausführungsbeispiel einer Pinole mit Tastkopf und Taststiftaufnahme im Längsschnitt;
- Fig. 13: ein geändertes Ausführungsbeispiel einer Pinole mit Dreh-/Schwenkgelenk mit Tastkopf im Längsschnitt;
- Fig. 14: ein geändertes Ausführungsbeispiel einer Pinole mit Dreh-/Schwenkgelenk, Tastkopf und Taststiftaufnahme im Längsschnitt.

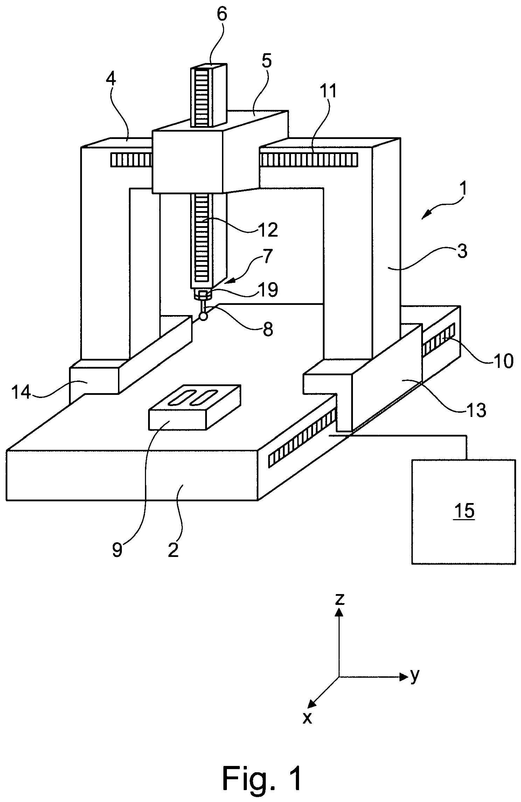

Fig. 1 zeigt ein Koordinatenmessgerät 1 in Portalbauweise mit einem Werkzeugtisch 2 und einem Portal 3. Das Portal 3 weist eine Traverse 4 auf. An der Traverse 4 ist ein Schlitten 5 angeordnet, an dem wiederum eine Pinole 6 angeordnet ist. Das Portal 3 ist in X-Richtung beweglich, der Schlitten 5 in Y-Richtung und die Pinole 6 in Z-Richtung. An der Pinole 6 ist ein Tastkopf 7 angeordnet, der einen Taststift 8 trägt. Auf dem Messtisch 2 des Koordinatenmessgerätes ist ein Werkstück 9 angeordnet.

An dem Messtisch 2 ist ein Maßstab 10 angeordnet, an der Traverse 4 ein Maßstab 11 und an der Pinole 6 ein Maßstab 12. Über entsprechende Wegmesssysteme (nicht dargestellt) kann die Position des Taststiftes 8 erfasst werden. Das Portal 3 weist Portalfüße 13, 14 auf, mit denen das Portal 3 an dem Messtisch 2 beweglich angeordnet ist. Über einen Computer 15, der auch eine Steuereinheit enthält, werden die Messwerte erfasst und verarbeitet.

Grundsätzlich besteht auch die Möglichkeit, dass das Portal 3 feststehend angeordnet ist und der Werkzeugtisch mit dem Werkstück relativ zu dem Portal verfahren wird.

Darüber hinaus ist auch bekannt, zum Beispiel einen Drehtisch auf dem Werkzeugtisch 2 anzuordnen.

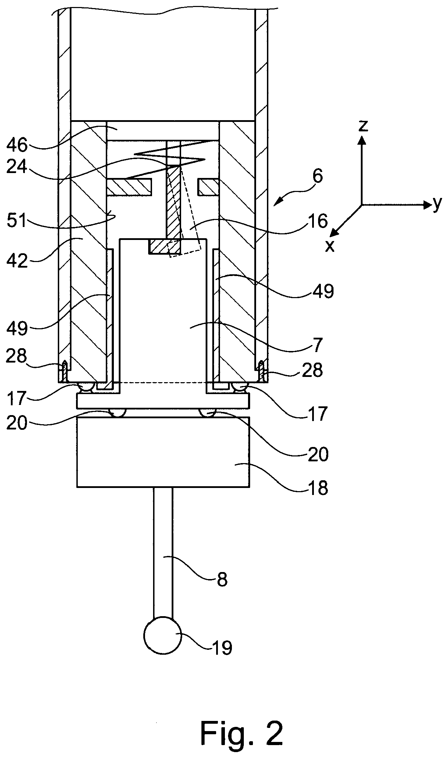

Fig. 2 zeigt die Pinole 6 in schematischer Darstellung. In der Pinole 6 sind ein Interface 42 und der Tastkopf 7 angeordnet. Der Tastkopf 7 wird mittels eines in Y-Richtung schwenkbaren und in Z-Richtung bewegbaren Hakens 16 mittels einer Dreipunktlagerung 17 in der Pinole 6 fixiert. An dem Tastkopf 7 ist eine Taststifthalterung 18 angeordnet, die den Taststift 8 mit einem Tastelement 19 trägt. Die Taststifthalterung 18 ist ebenfalls mittels einer Dreipunktlagerlagerung 20 an dem Tastkopf 7 lösbar befestigt. Die Haltemittel für die Taststifthalterung 18 sind in Fig. 2 nicht dargestellt.

In Fig. 2 ist lediglich schematisch ein Interface 42 vorgesehen. Das Interface 42 weist eine Haltevorrichtung 46 für den Haken 16 auf. An dem Interface 42 ist auch die Dreipunktlagerung 17 angeordnet.

Das Interface 42 ist innerhalb der Pinole 6 angeordnet. Das Interface 42 ist mit Schrauben 28 an der Pinole 6 angeordnet. Durch Lösen der Schrauben 28 kann das Interface 42 aus der Pinole 6 entfernt werden.

Damit der Tastkopf 7 beim Wechseln keinen Schaden nimmt, falls er mit einer Innenwand des Interface 42 in Kontakt kommt, ist eine Schutzvorrichtung 49 vorgesehen. Die Schutzvorrichtung 49 ist beispielsweise aus Kunststoff gebildet. Die Schutzvorrichtung 49 ist in Fig. 2 flächig ausgebildet. Die Schutzvorrichtung 49 ist in dem Ausführungsbeispiel als Segment an einer Innenfläche 51 des Interface 42 angeordnet ist. Die Schutzvorrichtung 49 kann auch eine größere axiale Ausdehnung in Richtung einer Längsachse der Pinole 6 aufweisen, als in Fig. 2 dargestellt. Sie kann segmentweise mit mindestens einem Segment oder kontinuierlich ausgebildet sein.

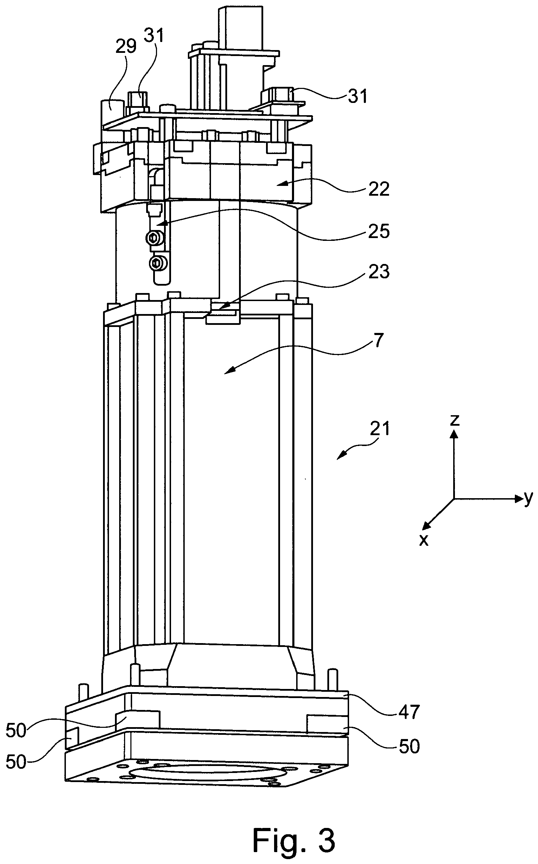

Fig. 3 zeigt eine Tastkopfhaltevorrichtung 21, die in der Pinole 8 (in Fig. 3 nicht dargestellt) angeordnet ist. Die Tastkopfhaltevorrichtung 21 weist eine Klemmeinheit 22 auf. Die Klemmeinheit 22 weist den Haken 16 auf (in Fig. 2 dargestellt). Ein Sensor 23 erfasst, ob der Tastkopf 7 in der Tastkopfhaltevorrichtung 21 eingeschoben ist. Der Sensor 23 kann als Lichtschranke ausgebildet sein. Wird der Sensor 23 ausgelöst, wird der Haken 16 mittels einer Druckfeder 24 (in Fig. 2 dargestellt) in Richtung der Z-Achse nach oben gedrückt. Durch die Druckfeder 24 ist gewährleistet, dass während der Fixierung des Tastkopfes 7 in der Pinole 6 keine weitere äußere Energie zugeführt werden muss und die Fixierung des Tastkopfes 7 erhalten bleibt. Zum Lösen des Tastkopfes 7 wird Druckluft in das System eingeführt, so dass der Haken 16 in negativer Z-Richtung in Richtung der Dreipunkthalterung 17 bewegt wird und anschließend in die in Fig. 2 gestrichelte Position geschwenkt werden kann, so dass der Tastkopf 7 eingewechselt werden kann.

Gemäß Fig. 3 sind weitere Sensoren 25 vorgesehen zur Erkennung einer Kolbenposition.

Darüber hinaus ist eine Vorrichtung 23 vorgesehen, die erkennt, ob ein Tastkopf 7 oder ein Sensor eingesetzt ist. Die Vorrichtung 23 kann als Lichtschranke ausgebildet sein.

Der Tastkopf 7 weist eine Lichtführung 47 auf. Diese Lichtführung 47 ist als Leuchtband aus LEDs gebildet.

Darüber hinaus weist der Tastkopf 7 Abdeckkappen 50 auf. Unter jeder der Abdeckkappen 50 ist ein mechanisches Verbindungselement (beispielsweise eine Klemmung oder eine Schraubverbindung) (nicht dargestellt) angeordnet. Durch Lösen dieser Mechanik kann die gesamte in Fig. 3 dargestellte Tastkopfhaltevorrichtung 21 mit einem Tastkopf oder einem Sensor oder einem Adapter eines Dreh-/Schwenkgelenkes aus der Pinole 6 entnommen werden. Es handelt sich hierbei um eine Notentriegelung, falls der Haken 16 (in Fig. 3 nicht dargestellt) den Tastkopf 7 oder den Sensor oder den Adapter des Dreh-/Schwenkgelenks aufgrund eines Fehlers nicht freigibt.

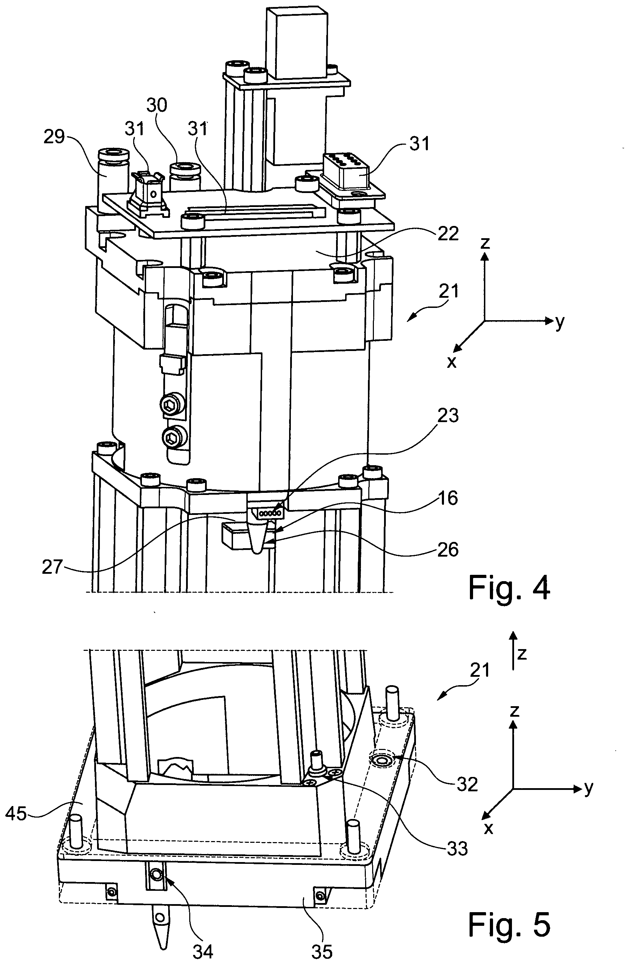

Fig. 4 zeigt den oberen Teil der Tastkopfhaltevorrichtung 21. In Fig. 4 ist der Haken 16 dargestellt. Darüber hinaus sind Zentrierstifte 26, 27 vorgesehen und ein Sensor 23, der erkennt, ob ein Tastkopf 7 in der Tastkopfhaltevorrichtung 21 angeordnet ist.

Weiterhin sind zwei Druckluftanschlüsse 29, 30 vorgesehen. Der Druckluftanschluss 30 ist vorgesehen, um ein Lösen des Hakens 16 zu ermöglichen.

Darüber hinaus sind elektrische Anschlüsse 31 vorgesehen für die Stromversorgung von Sensoren, Weiterleitung von Daten vom Tastkopf, vom Sensor oder Interface und dergleichen mehr.

Fig. 5 zeigt den unteren Teil der Tastkopfhaltevorrichtung 21. Der untere Teil weist einen Luftanschluss 32 für externe Sensoren auf. Darüber hinaus ist ein optischer Anschluss 33 vorgesehen sowie ein so genannter Zustimmschalter 34. Die Tastkopfhaltevorrichtung 21 weist eine Ebene 35 mit einer Dreipunkthalterung auf. Der optische Anschluss 33 ist in Z-Richtung in axialer Richtung in Richtung der Befestigungsvorrichtung mit dem Haken 16 gegenüber der Ebene 35 mit der Dreipunkthalterung verschoben.

In den Fig. 3, 4 und 5 ist das Gehäuse der Pinole 6 nicht dargestellt. Das Gehäuse 6 reicht jedoch bis zur Ebene 35 der Dreipunktlagerung.

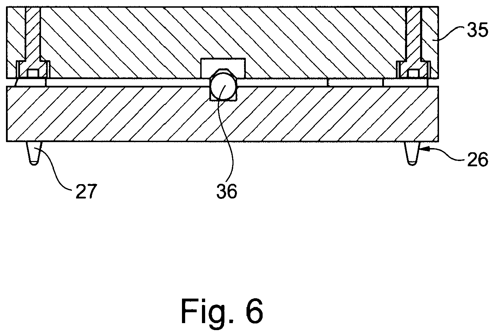

Die Ebene 35 mit der Dreipunktlagerung ist in Fig. 6 im Detail dargestellt. Die Dreipunktlagerung besteht aus drei Kugeln oder Kugelabschnitten 36. Darüber hinaus sind die Zentrierstifte 26, 27 vorhanden, die zum einen den Tastkopf 7 beim Einsetzen vorzentrieren und zum anderen bei asymmetrischer Ausgestaltung der Zentrierstifte 26, 27 ein falsches, das heißt verdrehtes Einsetzen des Tastkopfes 7 verhindern.

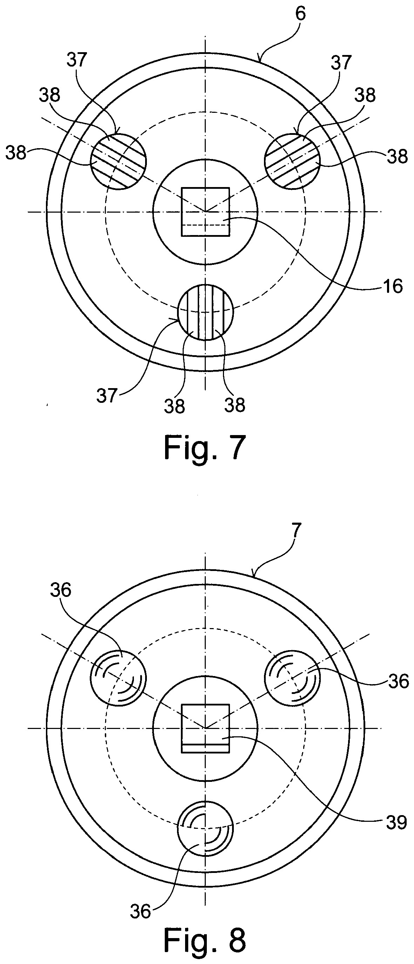

Fig. 7 zeigt die Dreipunktlagerung in Draufsicht. In Fig. 7 ist die Pinole 6 mit den drei Lagern 37 dargestellt. Die Lager 37 weisen jeweils zwei Zylinder 38 auf. Darüber hinaus ist der Haken 16 vorgesehen.

Fig. 8 zeigt den Tastkopf 7, in dem drei Halbkugeln 36 angeordnet sind. Die Halbkugeln 36 kommen, wenn der Tastkopf 7 an der Pinole 6 angeordnet wird, mit den Zylindern 38 an insgesamt sechs Punkten in Kontakt. Hierdurch wird eine reproduzierbare und hochpräzise Lagerung erreicht. Der Tastkopf 7 weist eine Aufnahme 39 für den Haken 16 auf.

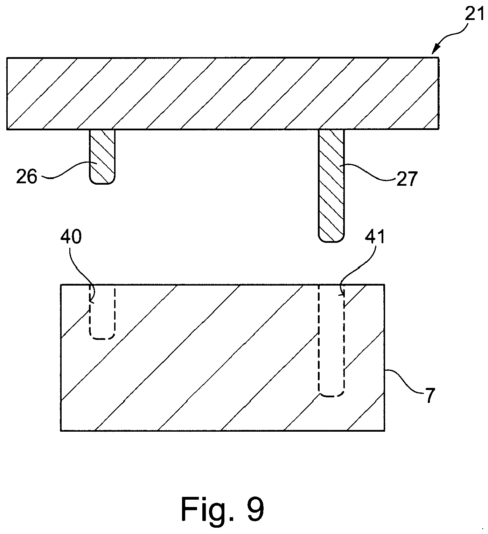

Fig. 9 zeigt den unteren Teil der Tastkopfhalteeinrichtung 21 mit den Zentrierstiften 26, 27. Die Zentrierstifte greifen in Aufnahmen 40, 41 des Tastkopfes 7. Die Zentrierstifte 26, 27 sind unterschiedlich lang ausgebildet. Aus diesem Grunde kann der Zentrierstift 27 ausschließlich in die Aufnahme 41 eingeführt werden. Ein Verdrehen um 180° Grad des Tastkopfes 7 ist aus diesem Grunde nicht möglich.

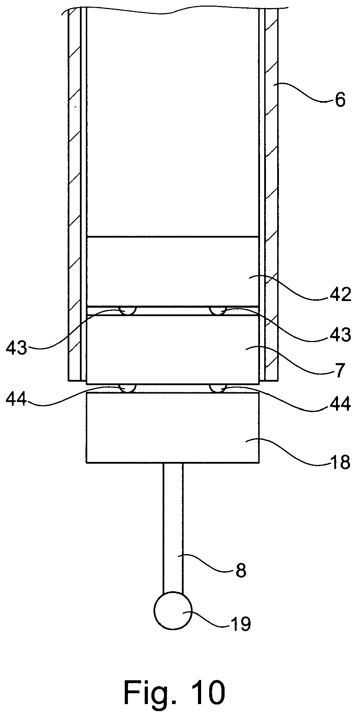

In den Fig. 1 bis 9 wurde die Erfindung mit einem in der Pinole 6 angeordneten Interface 42 und Tastkopf 7 dargestellt. Das Interface 42 ist gemäß Fig. 10 lösbar fest in und an der Pinole angeordnet. Zur lösbar festen Verbindung können beispielsweise Schrauben 28 (in Fig. 10 nicht dargestellt) vorgesehen sein. Gemäß Fig. 10 ist an dem Interface 42 der Tastkopf 7 reproduzierbar auswechselbar angeordnet. Hierzu weist das Interface 42 eine Dreipunktlagerung 43 auf. Der Tastkopf 7 weist wiederum eine Dreipunktlagerung 44 für die Taststifthalterung 18, die die Pinole 8 und das Tastelement 19 trägt.

An Stelle des Tastkopfes 7 kann auch ein Sensor (nicht dargestellt) vorgesehen sein. Es kann sich hierbei beispielsweise um einen optischen Sensor, einen optischen Tastkopf oder einen Rauheitssensor oder dergleichen handeln.

Die Ebene 35 der Dreipunkthalterung ist am tastkopfseitigen Ende 45 der Pinole 6 angeordnet (Fig. 5).

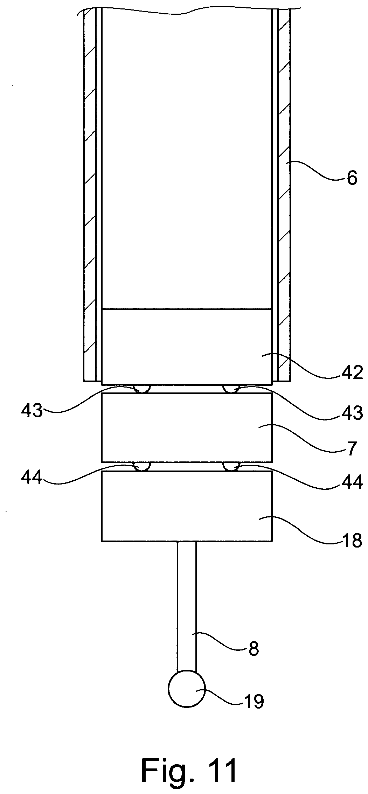

Fig. 11 zeigt das Ausführungsbeispiel gemäß Fig. 10 in geänderter Ausführungsform. Gleiche Teile sind mit gleichen Bezugszahlen versehen.

Gemäß Fig. 11 ist das Interface 42 in der Pinole 6 angeordnet. Der Tastkopf 7 und die Taststifthalterung 18 sind außerhalb der Pinole 6 angeordnet.

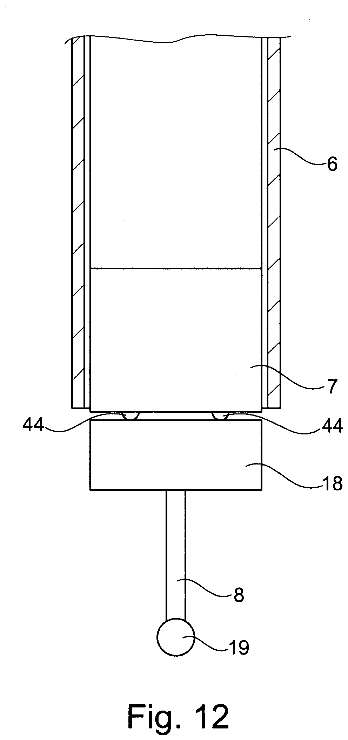

Fig. 12 zeigt ein weiteres Ausführungsbeispiel. Gemäß Fig. 12 ist lediglich ein Tastkopf 7 vorgesehen, der in der Pinole 6 angeordnet ist.

Der Tastkopf 7 weist eine Dreipunktlagerung 44 für die Taststifthalterung 18 auf. An der Taststifthalterung 18 ist der Taststift 8 mit dem Tastelement 19 angeordnet. Gemäß Fig. 12 ist kein Interface vorgesehen.

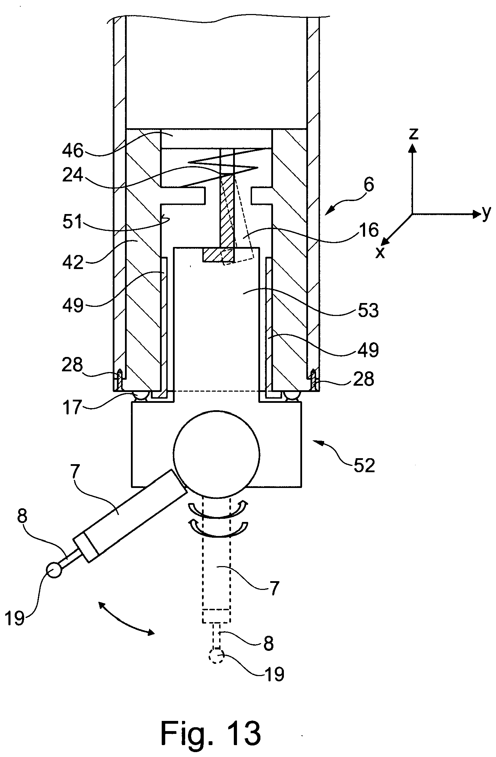

Fig. 13 zeigt die Pinole 6 mit dem in der Pinole 6 angeordneten Interface 42. In dem Interface 42 ist ein Adapter 53 eines Dreh-/Schwenkgelenkes 52 angeordnet. An Stelle des Tastkopfes 7, wie er in Fig. 2 dargestellt ist, ist in dem Interface 42 der Adapter 53 des Dreh-/Schwenkgelenkes 52 angeordnet. An dem Dreh-/Schwenkgelenk 52 ist ein Tastkopf 7 vorgesehen sein, an dem auswechselbar ein Taststift 8 mit einer Tastkugel 19 anordbar ist. Der Taststift 8 kann in die gestrichelt dargestellte Position geschwenkt werden.

Der Adapter 53 des Dreh-/Schwenkgelenkes 52 ist mittels des Hakens 16 und einer Dreipunktlagerung 17 reproduzierbar in dem Interface 42 angeordnet. Die Schutzvorrichtung 49 schützt den Adapter 53 beim Einwechseln vor Schäden.

Das Interface 42 ist innerhalb der Pinole 6 angeordnet. Das Interface 42 ist mit Schrauben 28 an der Pinole 6 angeordnet. Durch Lösen der Schrauben 28 kann das Interface 42 aus der Pinole 6 entfernt werden.

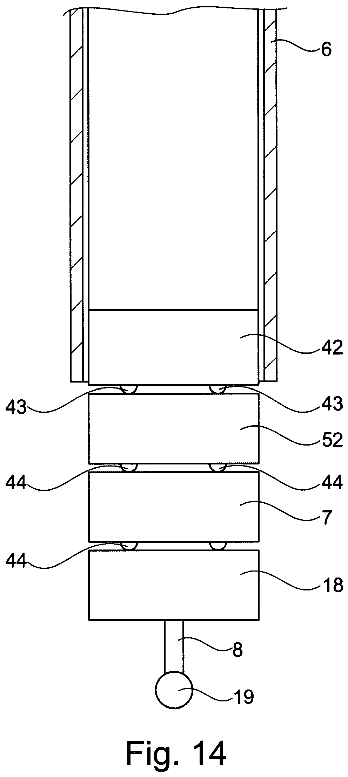

Fig. 14 zeigt die Pinole 6, in der das Interface 42 angeordnet ist. An der Pinole 6 ist das Dreh-/Schwenkgelenk 52 angeordnet. An dem Dreh-/Schwenkgelenk 52 ist wiederum der Tastkopf 7 angeordnet der die Taststifthalterung 18 trägt. Der Taststift 8 mit der Tastkugel 19 ist an der Taststifthalterung 18 angeordnet. Zwischen dem Interface 42, dem Dreh-/Schwenkgelenk 52, dem Tastkopf 7 und der Taststifthalterung 18 ist jeweils eine Dreipunktlagerung 44 vorgesehen.

Das Interface 42 ist mit Schrauben 28 (nicht dargestellt), wie in Fig. 2 dargestellt, an der Pinole 6 angeordnet. Durch Lösen der Schrauben 28 kann das Interface 42 aus der Pinole 6 entfernt werden.

### Bezugszahlen

- 1: Koordinatenmessgerät
- 2: Werkzeugtisch
- 3: Portal
- 4: Traverse
- 5: Schlitten
- 6: Pinole
- 7: Tastkopf
- 8: Taststift
- 9: Werkstück
- 10: Maßstab
- 11: Maßstab
- 12: Maßstab
- 13: Portalfuß
- 14: Portalfuß
- 15: Computer
- 16: Haken
- 17: Dreipunktlager
- 18: Taststifthalterung
- 19: Tastelement
- 20: Dreipunktlagerung
- 21: Tastkopfhaltevorrichtung
- 22: Klemmeinheit
- 23: Sensor
- 24: Druckfedern
- 25: Sensoren
- 26: Zentrierstift
- 27: Zentrierstift
- 28: Schrauben
- 29: Druckluftanschluss
- 30: Druckluftanschluss
- 31: elektrischer Anschluss
- 32: Luftanschluss für externe Sensoren
- 33: optischer Anschluss
- 34: Zustimmschalter
- 35: Ebene der Dreipunkthalterung
- 36: Kugelabschnitte
- 37: Lager
- 38: Zylinder
- 39: Aufnahme
- 40: Aufnahme Zentrierstift
- 41: Aufnahme Zentrierstift
- 42: Interface
- 43: Dreipunktlager
- 44: Dreipunktlager
- 45: tastkopfseitiges Ende
- 46: Haltevorrichtung
- 47: Lichtführung (LED)
- 49: Schutzvorrichtung
- 50: Abdeckkappen
- 51: Innenfläche Interface
- 52: Dreh-/Schwenkgelenk
- 53: Adapter Dreh-/Schwenkgelenk

## Patentansprüche

1. Koordinatenmessgerät mit einer Pinole und
- einem Tastkopf oder
- einem Sensor oder
- einem Dreh-/Schwenkgelenk oder
- einem Dreh-/Schwenkgelenk mit einem an dem Dreh-/ Schwenkgelenk angeordneten Tastkopf oder Sensor und/oder
- einem Interface,
**dadurch gekennzeichnet, dass** der Tastkopf (7) oder der Sensor oder ein Adapter (53) des Dreh-/Schwenkgelenkes (52) und/oder das Interface (42) wenigstens teilweise in der Pinole (6) angeordnet sind/ist.

2. Koordinatenmessgerät nach Anspruch 1, **dadurch gekennzeichnet, dass** das Interface (42) wenigstens teilweise in der Pinole (6) angeordnet ist und dass der Tastkopf (7) oder der Sensor oder der Adapter (53) des Dreh-/Schwenkgelenkes (52) wenigstens teilweise in dem Interface (42) angeordnet ist.

3. Koordinatenmessgerät nach Anspruch 1 oder 2,
**dadurch gekennzeichnet, dass** der Tastkopf (7) oder der Sensor oder der Adapter (53) des Dreh-/Schwenkgelenkes (52) und/oder das Interface (42) vollständig in der Pinole (6) angeordnet sind/ist.

4. Koordinatenmessgerät nach einem der vorhergehenden Ansprüche, **dadurch gekennzeichnet, dass** das Interface (42) lösbar fest in der Pinole (6) angeordnet ist und der Tastkopf (7) oder Sensor oder der Adapter (53) des Dreh-/ Schwenkgelenkes (52) auswechselbar an oder in dem Interface (42) anordbar ist.

5. Koordinatenmessgerät nach Anspruch 1, 2 oder 4,
**dadurch gekennzeichnet, dass** der Tastkopf (7) oder der Sensor oder der Adapter (53) des Dreh-/Schwenkgelenkes (52) austauschbar wenigstens teilweise in der Pinole (6) angeordnet sind/ist.

6. Koordinatenmessgerät nach einem der vorhergehenden Ansprüche, **dadurch gekennzeichnet, dass** der auswechselbare Tastkopf (7) oder der Sensor oder das Dreh-/Schwenkgelenk (52) an dem Interface (42) reproduzierbar gelagert ist, oder dass der auswechselbare Tastkopf (7) oder der Sensor oder das Dreh-/Schwenkgelenk (52) an der Pinole (6) reproduzierbar gelagert ist.

7. Koordinatenmessgerät nach Anspruch 6, **dadurch gekennzeichnet, dass** Lager (17, 43, 44) zur reproduzierbaren Lagerung am tastkopfseitigen oder sensorseitigen oder dreh-/schwenkgelenkseitigen Ende des Interface (42) oder der Pinole (6) angeordnet sind.

8. Koordinatenmessgerät nach Anspruch 7, **dadurch gekennzeichnet, dass** die Lager (17, 43, 44) am tastkopfseitigen oder sensorseitigen oder dreh-/schwenkgelenkseitigen Ende (45) des Interface (42) oder der Pinole (6) und außerhalb des Interface (42) oder außerhalb der Pinole (6) oder innerhalb des Interface (42) oder innerhalb der Pinole (6) angeordnet sind.

9. Koordinatenmessgerät nach Anspruch 7 oder 8,
**dadurch gekennzeichnet, dass** die Lager (17, 43, 44) als Dreipunktlager (17, 43, 44) ausgebildet sind.

10. Koordinatenmessgerät nach einem der vorhergehenden Ansprüche, **dadurch gekennzeichnet, dass** eine Befestigungsvorrichtung zur lösbaren Befestigung des Tastkopfes (7) oder des Sensors oder des Dreh-/Schwenkgelenkes (52) in der Pinole (6) am lagerfernen Ende des Tastkopfes (7) oder des Sensors oder des Dreh-/Schwenkgelenkes (52) angeordnet ist.

11. Koordinatenmessgerät nach Anspruch 10, **dadurch gekennzeichnet, dass** die Befestigungsvorrichtung als Haken (16) ausgebildet ist.

12. Koordinatenmessgerät nach einem der Ansprüche 10 oder 11, **dadurch gekennzeichnet, dass** wenigstens ein Sensor (25) für die Überwachung eines Schließzustandes der Befestigungsvorrichtung vorgesehen ist.

13. Koordinatenmessgerät nach einem der vorhergehenden Ansprüche, **dadurch gekennzeichnet, dass** eine Notentriegelung für das Interface (42) oder den Tastkopf (7) oder den Sensor oder das Dreh-/Schwenkgelenk (52) vorgesehen ist.

14. Koordinatenmessgerät nach einem der vorhergehenden Ansprüche, **dadurch gekennzeichnet, dass** eine Lichtschranke (23) für die Erfassung einer Endposition des Tastkopfes (7) oder des Sensors oder des Dreh-/Schwenkgelenkes (52) nach einem Einwechseln des Tastkopfes (7) oder des Sensors oder des Dreh-/Schwenkgelenkes (52) vorgesehen ist.

15. Koordinatenmessgerät nach einem der vorhergehenden Ansprüche, **dadurch gekennzeichnet, dass** wenigstens ein zusätzlicher Versorgungsanschluss (32) für den Tastkopf oder den Sensor oder das Dreh-/Schwenkgelenk (52) oder das Interface in der Ebene (35) der Lagerung angeordnet ist.

16. Koordinatenmessgerät nach einem der vorhergehenden Ansprüche, **dadurch gekennzeichnet, dass** eine optische Schnittstelle (33) von der Ebene (35) der Dreipunktlagerung ausgehend in axialer Richtung der Pinole (6) in Richtung der Befestigungsvorrichtung (16) verschoben angeordnet ist.

17. Koordinatenmessgerät nach einem der vorhergehenden Ansprüche, **dadurch gekennzeichnet, dass** für ein manuelles Einwechseln des Tastkopfes (7) oder des Sensors oder des Dreh-/Schwenkgelenkes (52) ein Schalter (34) zum Auslösen eines Wechselvorganges vorgesehen ist.

18. Koordinatenmessgerät nach einem der vorhergehenden Ansprüche, **dadurch gekennzeichnet, dass** an der Pinole (6) oder dem Interface (42) oder dem Tastkopf (7) oder dem Sensor oder dem Dreh-/Schwenkgelenk (52) wenigstens ein Zentrierstift (26, 27), vorzugsweise wenigstens zwei Zentrierstifte (26, 27) vorgesehen ist/sind.

19. Koordinatenmessgerät nach einem der vorhergehenden Ansprüche, **dadurch gekennzeichnet, dass** an dem Interface (42) oder an dem Tastkopf (7) oder an dem Sensor oder dem Dreh-/Schwenkgelenk (52) eine optische Statusanzeige (47) angeordnet ist.

20. Koordinatenmessgerät nach einem der vorhergehenden Ansprüche, **dadurch gekennzeichnet, dass** in und/oder an der Pinole (6) für das Interface (42) oder den Tastkopf (7) oder den Sensor oder das Dreh-/Schwenkgelenk (52) eine Schutzvorrichtung (49) vorgesehen ist oder dass in und/oder an dem Interface (42) für den Tastkopf (7) oder den Sensor oder das Dreh-/Schwenkgelenk (52) eine Schutzvorrichtung (49) vorgesehen ist.
